Europäisches Patentamt

European Patent Office

Office européen des brevets

(11) Veröffentlichungsnummer: **0 414 060 A1**

# (12) EUROPÄISCHE PATENTANMELDUNG

(21) Anmeldenummer: 90115347.8

(22) Anmeldetag: **10.08.90**

(51) Int. Cl.5: **C08L 59/02, C08L 75/08**

(30) Priorität: **19.08.89 DE 3927424**

(43) Veröffentlichungstag der Anmeldung:
**27.02.91 Patentblatt 91/09**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Bohnet, Siegbert, Dr.**
**Collinistrasse 5**
**D-6800 Mannheim 1(DE)**
Erfinder: **Lehrich, Friedhelm. Dr.**
**Vergissmeinnichtweg 6**
**D-6720 Speyer(DE)**
Erfinder: **Goerrissen, Heiner, Dr.**
**Im Zinkig 112**
**D-6700 Ludwigshafen(DE)**

(54) **Polyoxymethylen-Polyurethan-Formmassen mit verbesserter Lichtbeständigkeit, Verfahren zu ihrer Herstellung und ihre Verwendung.**

(57) Die Erfindung betrifft Polyoxymethylen-Polyurethan-Formmassen, die enthalten

A) mindestens ein Polyoxymethylen-homo- und/oder -copolymerisat,

B) mindestens ein aliphatisches thermoplastisches Polyurethan mit einer Shore-A-Härte von 78 bis 95, das hergestellt wurde durch Umsetzung von Polyoxytetramethylen-glykol, 4,4'-Diisocyanato-dicyclohexylmethan und Butandiol-1,4, zweckmäßigerweise in einem Molverhältnis im Bereich von 1 : 2,3 bis 3,5 : 1,3 bis 2,5 und

C) gegebenenfalls mindestens einen Zusatzstoff, vorzugsweise einen Lichtstabilisator.

Zur Herstellung der Formmassen werden die Komponenten (A), (B) und gegebenenfalls (C) vorteilhafterweise in einem Extruder bei Temperaturen von 150 bis 260°C zusammengeschmolzen.

Die Formmassen eignen sich zur Herstellung von Folien oder Formkörpern, die beispielsweise in der Fahrzeug-, Elektrogeräte- oder Elektronikindustrie Anwendung finden.

EP 0 414 060 A1

EP 0 414 060 A1

## POLYOXYMETHYLEN-POLYURETHAN-FORMMASSEN MIT VERBESSERTER LICHTBESTÄNDIGKEIT, VER-FAHREN ZU IHRER HERSTELLUNG UND IHRE VERWENDUNG

Gegenstand der Erfindung sind Polyoxymethylen-Polyurethan-Formmassen mit verbesserter Lichtbeständigkeit auf der Grundlage von Polyoxymethylenen, aliphatischen thermoplastischen Polyurethanen und gegebenenfalls Zusatzstoffen.

Thermoplastisch verarbeitbare Formmassen auf der Grundlage von hochmolekularen Polyoxymethylenen - im folgenden abgekürzt POM genannt - und thermoplastischen Polyurethan-Elastomeren - abgekürzt TPU genannt - sind bekannt und werden beispielsweise beschrieben in der DE-A-1 193 240 (GB-A-1 017 244), DE-A-20 51 028, EP-A-115 847, EP-A-0 116 456, EP-A-0 117 664 und EP-A-167 369.

Formkörper aus derartigen Formmassen besitzen eine hohe Reißfestigkeit, außerordentliche Zähigkeit und Druckfestigkeit.

Bekannte POM-TPU-Mischungen besitzen jedoch für spezielle Anwendungen eine nicht ausreichende Lichtbeständigkeit.

Zur Verringerung der Vergilbung finden nach Angaben der EP-A-0 156 285 POM-Formmassen Verwendung, die im wesentlichen aus POM (a) und 5 bis 50 Gew.%, bezogen auf die Gesamtmischung, eines kautschukelastischen Pfropfcopolymeren (b) sowie gegebenenfalls einer weiteren Komponente (c) z.B. einem Polyurethan, segmentierten Copolyester oder Ethylen-VinylacetatCopolymeren, bestehen, wobei das Pfropfcopolymere (b) in dem POM (a) in feiner Verteilung vorliegt und aus Partikeln besteht, die aus einem kautschukelastischen, einphasigen Kern auf Basis von Polydien und einer harten Pfropfhülle aufgebaut sind.

Nach der Referatekopie 86-242 483/37 zu dem JP Patent Nr. 00 9944 (02.08.86) besteht eine ähnliche Formmasse aus (a) 90 bis 55 Gew.-Teilen eines Nitril-Dien-Kautschuk-Styrol-Copolymeren, (b) 5 bis 40 Gew.-Teilen eines TPU und (c) 5 bis 30 Gew.-Teilen eines oder mehrerer thermoplastischer Polyester, Polyacetale oder Polyamide.

Nachteilig an diesen Formmassen sind ihre mangelhafte Zähigkeit, die besonders bei tiefen Temperaturen unzureichend ist, und die Neigung zur Verfärbung bei der Extrusion. Darüber hinaus sind sie in Vergaserkraftstoffen, z.B. in Benzin oder M-15-Testgemisch, nicht lösungsmittelbeständig.

Die Aufgabe der vorliegenden Erfindung bestand darin, die Vergilbungsneigung von POM-TPU-Mischungen zu verringern bzw. ihre Lichtbeständigkeit zu verbessern.

Diese Aufgabe konnte überraschenderweise durch den Zusatz eines speziell ausgewählten aliphatischen TPU gelöst werden.

Gegenstand der Erfindung sind somit POM-TPU-Formmassen, die enthalten

A) mindestens ein Polyoxymethylen-homo- und/oder -copolymerisat,

B) mindestens ein thermoplastisches Polyurethan und

C) gegebenenfalls mindestens einen Zusatzstoff und dadurch gekennzeichnet sind, daß das TPU (B) besteht aus mindestens einem aliphatischen TPU mit einer Shore-A-Härte von 78 bis 95, das hergestellt wurde durch Umsetzung von Polyoxytetramethylen-glykol, 4,4′-Diisocyanato-dicyclohexylmethan und Butandiol-1,4.

Gegenstände der Erfindung sind ferner spezielle Ausgestaltungen der erfindungsgemäßen POM-TPU-Formmassen nach einem der Ansprüche 2 bis 6, ein Verfahren zur Herstellung von Formmassen nach einem der Ansprüche 1 bis 6 gemäß Anspruch 7 und die Verwendung dieser POM-TPU-Formmassen zur Herstellung von Folien oder vorzugsweise Formkörpern nach Anspruch 9.

Die erfindungsgemäßen POM-TPU-Formmassen zeigen insbesondere bei Mitverwendung von Lichtschutzmitteln, vorzugsweise solchen aus der Gruppe der $\alpha$-Hydroxybenzophenonderivate und/oder Benzotriazolderivate eine deutlich geringere Verfärbung. Vorteilhaft sind ferner die erheblich verringerte Auskreidung von POM im Xenotest.

Zur Herstellung der erfindungsgemäßen POM-TPU-Formmassen können die Aufbaukomponenten POM (A) und TPU (B) in breiten Mengenverhältnissen variiert werden. Besonders bewährt haben sich und daher vorzugsweise verwendet werden POM-TPU-Mischungen, die, bezogen auf 100 Gew.-Teile, enthalten oder insbesondere bestehen aus

A) 40 bis 95 Gew.-Teilen, vorzugsweise 55 bis 90 Gew.-Teilen mindestens eines Polyoxymethylen-homo- und/oder -copolymerisats,

B) 5 bis 40 Gew.-Teilen, vorzugsweise 9,8 bis 30 Gew.-Teilen mindestens eines aliphatischen thermoplastischen Polyurethans und

C) 0 bis 55 Gew.-Teilen, vorzugsweise 0,2 bis 35 Gew.-Teilen mindestens eines Zusatzstoffes, vorzugsweise eines Lichtstabilisators.

(A) Geeignete Polyoxymethylene (A) sind Homopolymerisate des Formaldehyds oder Copolymerisate

2

des Formaldehyds sowie des Trioxans mit cyclischen und/oder linearen Formalen, wie Butandiolformal oder Epoxiden wie Ethylen- oder Propylenoxid. Die Homopolymerisate haben in der Regel thermisch stabile Endgruppen, wie Ester- oder Ethergruppen. Die Copolymerisate des Formaldehyds oder des Trioxans weisen vorteilhaft mehr als 50 %, insbesondere mehr als 75 % Oxymethylengruppen auf. Besonders bewährt haben sich Copolymerisate, in denen mindestens 0,1 % Gruppen des Comonomeren enthalten sind, die mindestens zwei benachbarte Kohlenstoffatome in der Kette haben. Besondere technische Bedeutung haben Polyoxymethylene erlangt, die 1 bis 10 Gew.% Comonomere enthalten. Solche Copolymerisate sind in an sich bekannter Weise durch kationische Copolymerisation von Trioxan mit geeigneten Comonomeren wie cyclischen Ethern oder Acetalen, z.B. Ethylenoxid, 1,3-Dioxolan, 1,3-Dioxan, 1,3-Dioxacycloheptan oder mit linearen Obligo- oder Polyformalen, wie Polydioxolan oder Polybutandiolformal erhältlich. In der Regel haben die verwendeten Polyoxymethylene ein Molekulargewicht (Zahlenmittel) $M_n$ von 2000 bis 100 000, vorzugsweise von 10 000 bis 100 000 und einem MFI bei 190 $^\circ$ C, 21,17 N nach DIN 53 735 von 0,5 bis 200, vorzugsweise von 1 bis 50. Besondere Bedeutung haben Polymerisate, die aus Trioxan und 1 bis 10 Mol.% Ethylenoxid, 1,3-Dioxolan oder Butandiolformal aufgebaut sind, erlangt. Die erfindungsgemäßen Formmassen enthalten, wie bereits dargelegt wurde, zweckmäßigerweise bevorzugt mindestens 55 bis 95 Gew.-Teile, bezogen auf 100 Gew.-Teile der Formmasse, mindestens eines Polyoxymethylens.

Als zusätzliche Comonomere für Trioxan werden gegebenenfalls noch Verbindungen mit mehreren polymerisierbaren Gruppen im Molekül, z.B. Alkylglycidylformale, Polyglykoldiglycidylether, Alkandioldiglycidylether oder Bis-(alkantriol)-triformale verwendet, und zwar in einer Menge von 0,05 bis 5 Gew.%, vorzugsweise 0,1 bis 2 Gew.%, bezogen auf die Gesamtmonomermenge.

(B) Die neuen Formmassen enthalten neben PoM (A) erfindungsgemäß mindestens ein aliphatisches TPU mit einer Shore-A-Härte von 78 bis 95, vorzugsweise von größer 81 bis 90 und insbesondere von größer 81 bis 86, das hergestellt wird nach dem Band- oder vorzugsweise Extruderverfahren durch Umsetzung von Polyoxytetramethylen-glykol, 4,4'-Diisocyanato-dicyclohexylmethan und Butandiol-1,4, wobei die Aufbaukomponenten zur Einstellung von Härte und Schmelzpunkt des aliphatischen TPU in einem Molverhältnis zweckmäßigerweise im Bereich von 1 : 2,3 bis 3,5 : 1,3 bis 2,5 und vorzugsweise im Bereich von 1 : 2,3 bis 2,9 : 1,3 bis 2,0 verwendet werden.

Geeignete Polyoxytetramethylen-glykole zur Herstellung der aliphatischen TPU besitzen zweckmäßigerweise Molekulargewichte von 800 bis 1200 und vorzugsweise von ungefähr 1000.

Die aliphatischen TPU werden, wie bereits dargelegt wurde, nach dem Bandverfahren oder vorzugsweise nach dem Extruderverfahren durch Umsetzung der Ausgangskomponenten in Gegenwart von Katalysatoren hergestellt.

Geeignete Katalysatoren, welche die Reaktion zwischen dem 4,4'-Diisocyanato-dicyclohexylmethan und den Hydroxylgruppen des Polyoxytetramethylen-glykols und Butandiols beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen Polyoxytetramethylen-glykol zugesetzt.

Zur Herstellung der aliphatischen TPU nach dem Bandverfahren werden die Aufbaukomponenten in den genannten Mengenverhältnissen im geschmolzenen Zustand und der Katalysator mit Hilfe eines Mischkopfes kontinuierlich gemischt. Die Reaktionsmischung wird auf einen Träger, vorzugsweise ein Förderband, aufgebracht und durch eine temperierte Zone geführt. Die Reaktionstemperatur in der temperierten Zone beträgt 60 bis 200 $^\circ$ C, vorzugsweise 100 bis 180 $^\circ$ C und die Verweilzeit 0,05 bis 0,5 Stunden, vorzugsweise 0,1 bis 0,3 Stunden.

Nach beendeter Reaktion wird das aliphatische TPU abkühlen gelassen, zerkleinert oder granuliert und zwischengelagert oder direkt mit POM (A) und gegebenenfalls den Zusatzstoffen (C) zu den erfindungsgemäßen Formmassen verarbeitet.

Beim Extruderverfahren werden die Aufbaukomponenten und der Katalysator einzeln oder als Gemisch in den Extruder eingeführt, bei Temperaturen von 100 bis 250 $^\circ$ C, vorzugsweise 140 bis 220 $^\circ$ C zur Reaktion gebracht, das erhaltene TPU extrudiert, abkühlen gelassen, granuliert und zwischengelagert oder ebenfalls direkt mit POM (A) und gegebenenfalls den Zusatzstoffen (C) zu den erfindungsgemäßen Formmassen weiterverarbeitet.

Die erfindungsgemäßen POM-TPU-Formmassen enthalten neben den Komponenten (A) und (B) vorzugsweise Zusatzstoffe (C).

Als geeignete, gegebenenfalls mitverwendbare Zusatzstoffe (C) kommen beispielsweise in Betracht: Antioxidantien, Wärmestabilisatoren, Nukleierungsmittel, Antistatika, Flammschutzmittel, Gleit- und Schmiermittel, Weichmacher, Pigmente, Farbstoffe, optische Aufheller, Entformungshilfsmittel und dergleichen. Als Zusatzstoff insbesondere bewährt hat sich und daher vorzugsweise eingesetzt wird ein oder mehrere Lichtstabilisatoren, wobei sich als Lichtstabilisator insbesondere α-Hydroxylbenzophenonderivate und/oder Benzotriazolderivate als vorzüglich geeignet erwiesen.

Als Stabilisatoren gegen den Einfluß von Wärme eignen sich insbesondere Polyamide, Amide mehrbasiger Carbonsäuren, Amidine, z.B. Dicyandiamid, Hyrazine, Harnstoffe, poly-(N-vinyllactame) und Erdalkalisalze von aliphatischen, vorzugsweise hydroxylgruppenhaltigen, ein- bis dreibasigen Carbonsäuren mit 2 bis 20 Kohlenstoffatomen, z.B. Calciumstearat, Calciumrizinoleat, Calciumlactat und Calciumcitrat. Als Oxidationsstabilisatoren werden vor allem Bisphenolverbindungen verwendet, vorzugsweise Diester von einbasigen 4-Hydroxyphenylalkansäuren, die 7 bis 13, vorzugsweise 7, 8 oder 9 Kohlenstoffatome aufweisen, mit Diolen, die 2 bis 6 Kohlenstoffatome enthalten. Als Antioxidantien werden vorteilhafterweise solche mit phenolischer Struktur, wie sie z.B. in der DE-A-27 02 661 beschrieben werden, eingesetzt.

Als Zusatzstoffe (C) können ferner verstärkend wirkende Füllstoffe, vorzugsweise Fasern, beispielsweise Kohlenstoff- oder insbesondere Glasfasern, die mit Haftvermittlern und/oder Schlichten ausgerüstet sein können, Anwendung finden.

Die Fasern, die in Mengen von 5 bis 50 Gew.-Teilen, vorzugsweise von 10 bis 30 Gew.-Teilen in 100 Gew.-Teilen der Formmasse enthalten sein können, weisen zweckmäßigerweise einen Durchmesser von 5 bis 20 μm, vorzugsweise von 8 bis 15 μm auf und besitzen im Granulat im allgemeinen eine mittlere Faserlänge von 0,05 bis 1 mm, vorzugsweise von 0,1 bis 0,5 mm.

Anstelle der Fasern, insbesondere Glasfasern, oder in Kombination mit diesen, können die erfindungsgemäßen Formmassen auch andere Füll- oder Verstärkungsmittel enthalten. Genannt seien beispielsweise Glaskugeln, Talkum, Kaolin, Wollastonit, Glimmer oder Kreide, die in Mengen von 3 bis 40 Gew.-Teilen, bezogen auf 100 Gew.-Teile der Formmassen, verwendet werden können.

Zur Herstellung der erfindungsgemäßen Formmassen kann der Zusatzstoff (C) zunächst dem POM (A) oder dem TPU (B) einverleibt werden. Das erhaltene Konzentrat aus Zusatzstoff (C) und POM (A) bzw. Zusatzstoff (C) und TPU (B) kann danach mit unbehandeltem TPU (B) bzw. unbehandeltem POM (A) abgemischt und auf diese Weise die Additivkonzentration in der erfindungsgemäßen Formmasse eingestellt werden. Nach einer anderen Verfahrensvariante können auch Zusatzstoff (C) enthaltende POM- und TPU-Konzentrate gemischt werden, sofern die Zusatzstoffkonzentration (C) in den Konzentraten innerhalb der für die Formmasse erforderlichen Menge liegt. Nach bevorzugten Ausführungsformen werden jedoch die Aufbaukomponenten (A), (B) und gegebenenfalls (C) der erfindungsgemäßen Formmassen direkt gemischt oder der Zusatzstoff (C) wird in eine vorgefertigte Mischung aus POM (A) und TPU (B) oder POM-TPU-Masse in den gewünschten Mengenverhältnissen eingebracht. Das Abmischen der Aufbaukomponenten (A), (B) und gegebenenfalls (C) wird vorteilhafterweise bei Temperaturen von 0 bis 150°C, vorzugsweise von 20 bis 100°C durchgeführt. Die Einarbeitung des Zusatzstoffs (C) oder Zusatzstoff (C)-Konzentrats in die POM-TPU-Masse oder Mischung aus POM (A) und TPU (B) erfolgt bei Temperaturen von 50 bis 260°C, vorzugsweise von 150 bis 240°C, im beispielsweise fließfähigen, erweichten oder geschmolzenen Zustand der Aufbaukomponenten (A) und (B) z.B. durch Rühren, Walzen, Kneten oder Extrudieren, beispielsweise unter Verwendung eines Doppelschnecken- oder Preßspritzmischextruders oder eines Kneters.

Nach dem zweckmäßigsten und daher vorzugsweise angewandten Herstellungsverfahren für die erfindungsgemäßen POM-TPU-Formmassen werden die Aufbaukomponenten (A), (B) und gegebenenfalls (C) in Form von vorgefertigten Mischungen oder insbesondere einzeln in einen Extruder, vorzugsweise Doppelschneckenextruder eingebracht, bei Temperaturen von 150 bis 260°C, vorzugsweise von 180 bis 240°C zusammengeschmolzen, die Schmelze extrudiert, abgekühlt und anschließend granuliert. Die erhaltenen Granulate können zwischengelagert oder direkt zur Herstellung von Formkörpern verwendet werden.

Die erfindungsgemäßen Formmassen besitzen neben guten mechanischen Eigenschaften eine deutlich verbesserte Lichtbeständigkeit und geringere Verfärbungstendenz und eignen sich zur Herstellung von beispielsweise Folien oder vorzugsweise Formkörpern nach bekannten Techniken, z.B. durch Blasformen, Extrusion oder Spritzgießen. Die Formkörper finden beispielsweise Verwendung in der Fahrzeug-, Elektrogeräte- und Elektronikindustrie.

Beispiele und Vergleichsbeispiele (allgemeine Herstellungsvorschrift)

80 Gew.-Teile eines POM,
20 Gew.-Teile TPU und gegebenenfalls

0,5 Gew.-Teile Lichtstabilisator

wurden bei 23° C gemischt und die Mischung in einen Doppelschneckenextruder (Typ ZSK 28 der Firma Werner & Pfleiderer) eingebracht, bei 220° C zusammengeschmolzen, extrudiert, granuliert und das erhaltene Granulat unter vermindertem Druck bei 80° C 15 Stunden lang getrocknet.

Aus dem Granulat wurden Formkörper gespritzt, an denen die folgenden mechanischen Eigenschaften gemessen wurden:

Thermostabilität:

$R_{N2}$: Der Gewichtsverlust einer Probe aus 2 g Granulat bei 2stündigem Erhitzen auf 222° C unter Stickstoff. Verbliebener Rückstand in Gew.%.

$R_{Luft}$: Der Gewichtsverlust einer Probe aus 1 g Granulat bei 2stündigem Erhitzen auf 222° C unter Luft. Verbliebener Rückstand in Gew.%.

MFI: bei 190° C, 21,17 N (2,16 kg) nach DIN 53 735

E-Modul: nach DIN 53 457

Zugversuch:

Zugfestigkeit nach DIN 53 455

Streckspannung nach DIN 53 455

Reißfestigkeit nach DIN 53 455

Reißdehnung nach DIN 53455

Lochkerbschlagzähigkeit ($a_{kl}$) nach DIN 53 753 bei 23° und -40° C

Fallbolzentest ($W_{50}$) nach DIN 53 443 bei 23° und -40° C

Schlagbiegeversuch ($a_N$) nach DIN 53 453 bei 23° und -40° C

Plastechon (instrumenteller Durchstoßversuch) nach DIN 53 443

Schädigungsarbeit ($W_{FS}$) bei 23° C und -40° C

Gesamtarbeit (Wges) bei 23° C und -40° C

IZOD nach Iso 180 / 4 A bei 23° C und -40° C.

Als POM fanden Verwendung:

POM 1: Polyoxymethylencopolymerisat, hergestellt aus Trioxan und ungefähr 3 Gew.% Butandiolformal, bezogen auf den Gesamtmonomergehalt. Das POM besaß ein Molekulargewicht (Gewichtsmittel) $M_W$ von ungefähr 70 000 und einen MFI bei 190° C, 21,17 N (2,16 kg; DIN 53 735) von 9 g/10 min.

POM 2: Polyoxymethylencopolymerisat hergestellt aus Trioxan und ungefähr 3 Gew.-% Butandiolformal, bezogen auf den Gesamtmonomergehalt. Das POM besaß ein Molekulargewicht (Gewichtsmittel) $M_W$ von ungefähr 50 000 und einen MFI bei 190° C, 21,17 N (2,16 kg; DIN 53 735) von 30 g/10 min.

POM 3: POM 1 in Form eines Rohpolymerisats, das noch ungefähr 15 Gew.% nicht umgesetztes Trioxan und ungefähr 5 Gew.% instabile Anteile enthielt.

Als TPU fanden Verwendung:

TPU 1: Handelsübliches TPU mit einer Shore-A-Härte von 78 auf der Grundlage eines Ethandiolbutandiolpolyadipats, Hexamethylen-diisocyanat und Hexandiol-1,6. Vergleichsprodukt

TPU 2: TPU mit einer Shore-A-Härte von 80, hergestellt durch Umsetzung von Ethandiolbutandiolpolyadipat mit einem Molekulargewicht von 2000 mit 4,4'-Diphenylmethan-diisocyanat und 1,4-Butandiol im Molverhältnis 1 : 2,8 : 1,8. Vergleichsprodukt

TPU 3: TPU mit einer Shore-A-Härte von 80, hergestellt durch Umsetzung von Polyoxytetramethylenglykol mit einem Molekulargewicht von 1000 mit 4,4'-Diisocyanato-dicyclohexylmethan und Butandiol-1,4 im Molverhältnis 1 : 2,3 : 1,4.

TPU 4: Handelsübliches TPU mit einer Shore-A-Härte von 85 auf der Grundlage eines Hexandiolpolyadipats, 4,4'-Diphenylmethan-diisocyanat und 1,4-Butandiol. Vergleichsprodukt

TPU 5: TPU mit einer Shore-A-Härte von 85, hergestellt durch Umsetzung von Polyoxytetramethylenglykol mit einem Molekulargewicht von 1000, 4,4'-Diphenylmethan-diisocyanat und Butandiol-1,4 im Molverhältnis 1 : 2,4 : 1,4. Vergleichsprodukt

Als Lichtschutzstabilisatoren fanden Verwendung:

T 1: Lichtschutzmittel auf Basis von Benzotriazol (Tinuvin® P der Firma Ciba-Geigy, Basel)

T 2: Lichtschutzmittel auf Basis von Benzotriazol (Tinuvin® 213 der Firma Ciba-Geigy)

T 3: Lichtschutzmittel auf Basis von Benzotriazol (Tinuvin® 234 der Firma Ciba-Geigy)

Sp: 20 bis 25 gew.-%ige Mischung von Tinuvin® P und dem Antioxidants Irganox® 245 der Firma Ciba-Geigy, Basel, im Gewichtsverhältnis 1 : 1 in dem TPU 3

Die zur Herstellung der Formmassen verwendeten POM, TPU und Lichtschutzmittel sowie die an den Formkörpern daraus gemessenen mechanischen Eigenschaften sind in Tabelle 1 und Tabelle 2 zusammengefaßt.

## Tabelle 1

| Vergl.-bsp. | POM | TPU | Lichtstabilisator | $R_{N_2}$ | $R_{Luft}$ | MFI | E-Modul | Zugversuch | | | Reißdehnung |
| | | | | | | | | Zugfestigkeit | Streckspannung | Reißfestigk. | |
| | [Art] | [Art] | [Art] | [Gew.%] | [Gew.%] | [g/10min] | [N/mm²] | [N/mm²] | [N/mm²] | [N/mm²] | [%] |
|---|---|---|---|---|---|---|---|---|---|---|---|
| I | 1 | 1 | – | – | 98,52 | 9,24 | 1550 | 36,2 | 36,1 | 33,5 | 18,9 |
| II | 1 | 1 | T3 | 99,50 | 98,55 | 9,24 | 1530 | 33,6 | 33,5 | 31,5 | 28,0 |
| III | 2 | 1 | – | 99,1 | 98,23 | 22,7 | 1537 | 34,1 | 34,0 | 32,5 | 28,1 |
| IV | 2 | 1 | T3 | 98,85 | 98,23 | 23,5 | 1538 | 33,7 | 33,6 | 31,1 | 29,9 |
| V | 1 | 2 | – | 99,52 | 98,03 | 9,3 | 1469 | 40,4 | 40,4 | 34,8 | 30,7 |
| VI | 1 | 2 | T3 | 99,72 | 97,89 | 9,3 | 1462 | 39,6 | 39,5 | 33,0 | 31,4 |
| VII | 3 | 1 | T3 | 99,05 | 95,9 | 6,41 | 1472 | 35,7 | 35,5 | 31,1 | 36,8 |
| Bsp. | | | | | | | | | | | |
| 1 | 1 | 3 | – | 99,70 | 99,08 | 7,6 | 1663 | 41,0 | 40,9 | 37,1 | 27,9 |
| 2 | 1 | 3 | T3 | 99,68 | 99,05 | 7,7 | 1661 | 41,0 | 40,9 | 35,7 | 32,4 |
| 3 | 2 | 3 | – | 99,62 | 98,85 | 19,3 | 1651 | 37,4 | 37,3 | 34,9 | 18,9 |
| 4 | 2 | 3 | T3 | 99,32 | 99,02 | 21,1 | 1647 | 37,8 | 37,7 | 35,6 | 17,0 |
| 5 | 3 | 3 | T3 | 99,66 | 99,1 | 7,6 | 1645 | 41,4 | 41,3 | 37,4 | 30 |

Formmasse

Mechanische Eigenschaften

EP 0 414 060 A1

Tabelle 1 (Fortsetzung)

| Vergl.-bsp. | $a_{KL}$ 23°C [kJ/m²] | $a_{KL}$ -40°C [kJ/m²] | $W_{50}$ 23°C [J] | $W_{50}$ -40°C [J] | $a_N$ 23°C [kJ/m²] | $a_N$ -40°C [kJ/m²] | Plastechon $W_{FS}$ 23°C [Nm] | Plastechon $W_{FS}$ -40°C [Nm] | Plastechon $W_{ges}$ 23°C [Nm] | Plastechon $W_{ges}$ -40°C [Nm] | IZOD 23°C [J/m] | IZOD -40°C [J/m] |
|---|---|---|---|---|---|---|---|---|---|---|---|---|
| I | 38,4 | 23,5 | 20,6 | 6,0 | o.Br.* | o.Br. | 24,3 | 6,9 | 25,1 | 7,1 | 12,6 | 10,6 |
| II | 42,0 | 24,1 | 23,9 | 7,4 | o.Br. | o.Br. | 25,0 | 10,5 | 25,9 | 10,7 | 12,5 | 11,1 |
| III | 27,2 | 22,7 | 24,5 | 8,0 | o.Br. | 71,4 | 19,3 | 10,1 | 19,8 | 10,2 | 9,0 | 10,2 |
| IV | 27,5 | – | 26,0 | 8,7 | o.Br. | 85,4 | 25,3 | 14,2 | 25,8 | 14,4 | 9,1 | 10,3 |
| V | 42,9 | 12,5 | 39,2 | 1,4 | o.Br. | 97,1 | 41,5 | 2,8 | 42,8 | 3,0 | 17,7 | 8,1 |
| VI | 44,7 | 13,2 | 43,9 | 1,6 | o.Br. | 79,2 | 40,1 | 2,7 | 41,3 | 2,8 | 14,5 | 7,7 |
| VII | 48,6 | 25,1 | 24,0 | 8,7 | o.Br. | 31.3 | 12,5 | 5,9 | 13,3 | 6,1 | 15,3 | 12,4 |
| Bsp. | | | | | | | | | | | | |
| 1 | 27,6 | 15,8 | 25,6 | 1,7 | o.Br. | 60,9 | 19,9 | 2,5 | 20,4 | 2,8 | 14,6 | 9,0 |
| 2 | 30,2 | 18,0 | 26,2 | 2,3 | o.Br. | 68,2 | 16,1 | 0,5 | 16,6 | 0,5 | 14,9 | 9,5 |
| 3 | 19,4 | 12,2 | 11,6 | 0,5 | 56,3 | 39,3 | 11,0 | 0,4 | 11,2 | 0,7 | 6,6 | 4,5 |
| 4 | 16,0 | – | 3,1 | 0,4 | 54,2 | – | 1,8 | 0,1 | 1,9 | 0,9 | 6,5 | 4,5 |
| 5 | 30 | 30,1 | 16,7 | 0,9 | o.Br. | 54,4 | 14,8 | 1,1 | 15,2 | 1,2 | 14,2 | 7,9 |

* ohne Bruch

Tabelle 2

| Gesamtfarbwerte (DE-Werte) der Xenontestversuche, bezogen auf den unbelichteten Formkörper | | | | | | |
|---|---|---|---|---|---|---|
| Vergl.-bsp. | Formmasse | | | Lichtstabi-[Art] | Gesamtfarbwerte nach Stunden Belichtung * | |
| | POM | | TPU [Art] | | 500 Stdn. | 1000 Stdn. |
| | [Art] | [Menge, Gew.-T] | | | | |
| VIII | Mischung aus 1 und 3 | 70 10 | 4 | Sp | 18,3 | 24,5 |
| IX | " | | 4 | T1 | 15,3 | 19,7 |
| X | " | | 4 | T3 | 13,4 | 14,7 |
| XI | " | | 4 | T2 | 13,1 | 13,2 |
| XII | " | | 5 | Sp | 13,7 | 11,4 |
| XIII | " | | 5 | T3 | 9,5 | 12,5 |
| XIV | " | | 5 | T2 | 9,9 | 9,7 |
| XV | " | | 1 | Sp | 2,3 | 2,5 |
| XVI | " | | 1 | T3 | 2,8 | 2,9 |
| XVII | " | | 1 | T2 | 3,6 | 4,3 |
| Bsp. | | | | | | |
| 6 | " | | 3 | Sp | 0,9 | 1,5 |
| 7 | " | | 3 | T3 | 1,6 | 1,4 |
| 8 | " | | 3 | T2 | 2,0 | 2,0 |

(* je kleiner die Zahlenwerte desto geringer ist die Verfärbung)

**Ansprüche**

1. Polyoxymethylen-Polyurethan-Formmassen, enthaltend
A) mindestens ein Polyoxymethylen-homo- und/oder -copolymerisat,
B) mindestens ein thermoplastisches Polyurethan und
C) gegebenenfalls mindestens einen Zusatzstoff,
dadurch gekennzeichnet, daß die Komponente (B) besteht aus mindestens einem aliphatischen thermoplastischen Polyurethan mit einer Shore-A-Härte von 78 bis 95, das hergestellt wurde durch Umsetzung von Polyoxytetramethylen-glykcl, 4,4′-Diisocyanato-dicyclohexylmethan und Butandiol-1,4.

2. Polyoxymethylen-Polyurethan-Formmassen nach Anspruch 1, dadurch gekennzeichnet, daß das aliphatische thermoplastische Polyurethan (B) mit einer Shore-A-Härte von 78 bis 95 hergestellt wurde durch Umsetzung von polyoxytetramethylen-glykol, 4,4′-Diisocyanato-dicyclohexylmethan und Butandiol-1,4 in einem Molverhältnis im Bereich von 1 : 2,3 bis 3,5 : 1,3 bis 2,5.

3. Polyoxymethylen-Polyurethan-Formmassen, bestehend, bezogen auf 100 Gew.-Teile, aus
A) 40 bis 95 Gew.-Teilen mindestens eines Polyoxymethlenhomo- und/oder -copolymerisats,
B) 5 bis 40 Gew.-Teilen mindestens eines aliphatischen thermoplastischen Polyurethans und
C) 0 bis 55 Gew.-Teilen mindestens eines Zusatzstoffes,
dadurch gekennzeichnet, daß das aliphatische thermoplastische Polyurethan (B) eine Shore-A-Härte von 78 bis 95 besitzt und hergestellt wurde durch Umsetzung von Polyoxytetramethylen-glykol, 4,4′-Diisocyanato-dicyclohexylmethan und Butandiol-1,4 in einem Molverhältnis im Bereich von 1 : 2,3 bis 3,5 : 1,3 bis 2,5.

4. Polyoxymethylen-Polyurethan-Formmassen nach einem der Ansprüche 1 bis 3, dadurch gekennzeichnet, daß die Polyoxymethylen-homo- und/oder -copolymerisate (A) ein durchschnittliches Molekulargewicht von 2000 bis 100 000 und einen MFI bei 190° C, 21,17 N nach DIN 53 735 von 0,5 bis 200 besitzen.

5. Polyoxymethylen-Polyurethan-Formmassen nach einem der Ansprüche 1 bis 4, dadurch gekennzeichnet, daß die Polyoxytetramethylen-glykole zur Herstellung der aliphatischen, thermoplastischen Polyurethane ein Molekulargewicht von 800 bis 1200, vorzugsweise von ungefähr 1000 besitzen.

6. Polyoxymethylen-Polyurethan-Formmassen nach einem der Ansprüche 1 bis 5, dadurch gekennzeichnet, daß diese als Zusatzstoff mindestens einen Lichtstabilisator aus der Gruppe der α-Hydroxybenzophenonderivate und/oder Benzotriazolderivate enthalten.

7. Verfahren zur Herstellung von Polyoxymethylen-Polyurethan-Formmassen, die, bezogen auf 100 Gew.-Teile, bestehen aus
A) 40 bis 95 Gew.-Teilen mindestens eines Polyoxymethylen-homo-und/oder -copolymerisats,
B) 5 bis 40 Gew.-Teilen mindestens eines aliphatischen thermoplastischen Polyurethans und
C) 0 bis 55 Gew.-Teilen mindestens eines Zusatzstoffes
dadurch gekennzeichnet, daß das thermoplastische Polyurethan (B) eine Shore-A-Härte von 78 bis 95 besitzt und hergestellt wird durch Umsetzung von Polyoxytetramethylen-glykol mit einem Molekulargewicht von 800 bis 1200, 4,4′-Diisocyanato-dicyclohexylmethan und Butandiol-1,4 in einem Molverhältnis im Bereich von 1 : 2,3 bis 3,5 : 1,3 bis 2,5 nach dem Band- oder Extruderverfahren.

8. Verfahren zur Herstellung von Polyoxymethylen-Polyurethan-Formmassen nach Anspruch 7, dadurch gekennzeichnet, daß man die Komponenten (A), (B) und gegebenenfalls (C) in einem Extruder bei Temperaturen von 150 bis 260° C zusammenschmilzt, die Schmelze extrudiert und anschließend granuliert.

9. Verwendung der Polyoxymethylen-Polyurethan-Formmassen nach einem der Ansprüche 1 bis 6 zur Herstellung von Folien oder vorzugsweise Formkörpern.

9

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 517 319  (E. RESKE et al.) <br> * Patentansprüche * <br> --- | 1-9 | C 08 L  59/02 <br> C 08 L  75/08 |
| X | EP-A-0 257 517  (BASF) <br> * Patentansprüche * <br> ----- | 1-9 | |

|  |  |  | RECHERCHIERTE SACHGEBIETE (Int. Cl.5) |
|---|---|---|---|
|  |  |  | C 08 L |

Der vorliegende Recherchenbericht wurde für alle Patentansprüche erstellt

| Recherchenort | Abschlußdatum der Recherche | Prüfer |
|---|---|---|
| DEN HAAG | 10-10-1990 | DERAEDT G. |

EPO FORM 1503 03.82 (P0403)